# EUROPÄISCHE PATENTSCHRIFT

(11) **EP 1 197 910 B1**
(45) Veröffentlichungstag und Bekanntmachung des Hinweises auf die Patenterteilung: **19.04.2006**
(21) Anmeldenummer: 01124167.6
(22) Anmeldetag: 10.10.2001
(51) Int. Cl.: G06K 7/10

(54) **Vorrichtung und Verfahren zur Erkennung von Codes**
Device and method for code recognition
Dispositif et méthode pour la reconnaissance de codes

(30) Priorität: 11.10.2000 DE 10050368
(43) Veröffentlichungstag der Anmeldung: 17.04.2002
(73) Patentinhaber: SICK AG, 79183 Waldkirch, Breisgau (DE)
(72) Erfinder: Gehring, Roland, 79215 Elzach-Prechtal (DE); Reichenbach, Jürgen, 79312 Emmendingen (DE); Kilian, Reinhold, 79183 Waldkirch (DE)
(74) Vertreter: Manitz, Finsterwald & Partner GbR

(56) Entgegenhaltungen:
- EP-A- 0 704 821
- EP-A- 0 926 582
- DE-A- 2 951 780
- DE-A- 19 624 930
- DE-A- 19 926 120
- US-A- 5 426 288
- US-A- 5 841 121
- US-A- 5 900 611

## Beschreibung

Die Erfindung betrifft eine Vorrichtung zur Erkennung von Codes mit einem Lichtsender zur Aussendung von Lichtsignalen in Richtung eines Scanbereichs, einem Lichtempfänger zum Empfang eines aus dem Scanbereich remittierten Lichtsignals, sowie einer Steuer- und Auswerteeinheit zur Ansteuerung von Lichtsender und Lichtempfänger und zur Ermittlung eines Codes aus dem empfangenen Lichtsignal, wobei die Steuer- und Auswerteeinheit eine die Ermittlung eines Codes auslösende Triggerschaltung umfaßt. Weiterhin betrifft die Erfindung ein Verfahren zur Erkennung von Codes mittels eines Codelesers, bei dem von einem Lichtsender Lichtsignale in Richtung eines Scanbereichs ausgesandt werden, die Lichtsignale aus dem Scanbereich zu einem Lichtempfänger remittiert werden, das Ausgangssignal des Lichtempfängers einer Steuer- und Auswerteeinheit zur Ansteuerung von Lichtsender und Lichtempfänger und zur Ermittlung eines Codes aus dem empfangenen Lichtsignal zugeführt werden, wobei die Ermittlung eines Codes von einer der Steuer- und Auswerteeinheit zugeordneten Triggerschaltung ausgelöst wird,

Gemäß Stand der Technik ist es bekannt, als Triggerschaltung eine externe Lichtschranke einzusetzen, welche dazu in der Lage ist, beispielsweise auf einem Förderband transportierte Gegenstände zu detektieren und in Abhängigkeit von der Detektion eines Objekts den Beginn eines Lesetors zu triggern, innerhalb dessen eine Codeermittlung durch den Codeleser stattfindet. Auf diese Weise wird erreicht, daß immer nur dann versucht wird, einen Code zu ermitteln, wenn sich auch tatsächlich ein möglicherweise einen Code tragendes Objekt innerhalb des Scanbereichs befindet.

In DE 196 24 930 A1 ist ein stationäres Datensymbol-Lesegerät beschrieben. Das Datensymbol-Lesegerät enthält ein CCD-Element, ein optisches System, eine CCD-Steuerschaltung, einen Verstärker, eine Binärschaltung, einen Speicher, eine CPU, Lichtquellen, eine Lichtquellensteuerung, eine Kommunikationssteuerung, eine Schaltsteuerung und einen Triggerschalter. Beim Lesen wird ein Video-Vollbild aufgenommen, und es wird eine Anzahl Bildelemente entsprechend der Versetzung eines Authentifiziermusters, das dem Datensymbol zugeordnet ist, zwischen einem zweiten Halbbild und einem ersten Halbbild berechnet. Die Geschwindigkeit des Datensymbols wird aus der Versetzung berechnet. Die Belichtungszeit wird aus der Geschwindigkeit berechnet, und die optimale Lichtintensität wird aus der Belichtungszeit berechnet.

In US-A-5 841 121 ist Handlesegerät für einen optisch lesbaren Informationssatz beschrieben, das ein oder mehrere Photosensorfelder, wenigstens eine Beleuchtung für einen Informationssatz und ein Informationssatzbildübertragungssystem zum Projizieren eines lesbaren Bildes eines Informationsdatensatzes auf das eine Photosensorfeld bzw. die mehreren Photosensorfelder besitzt.

In EP-A-0 704 821 sind ein Bildverarbeitungsverfahren und ein Bildverarbeitungsgerät beschrieben, mittels derer Bilder von nacheinander von einem Förderband oder einem anderen Fördermittel zugeführten einzelnen Objekten erfasst werden und die so erfassten Bilder mit Bildverarbeitung weiterverarbeitet werden. Die Bildverarbeitung wird beispielsweise zu dem Zweck durchgeführt, Markierungen auf einem Objektbild mit einem Modellbild zu vergleichen, um Unterschiede zwischen den beiden Bildern zu erkennen. Wenn Unterschiede erkannt werden, kann das gespeicherte Modellbild verändert oder durch das eingegebene Objektbild ersetzt werden, ohne eine gesamte Produktionsstraße anzuhalten, um ein ganz neues Modellbild zu erzeugen. Auf diese Weise können die aufgezeichneten Modelldaten aktualisiert werden, ohne den Strom auf dem Band zu unterbrechen, und es können geeignete Korrekturdaten effizient aufgezeichnet werden.

In EP-A-0 926 582 ist eine Vorrichtung beschrieben, die es ermöglicht, optische Codes auf auf einer Trägerfläche getragenen Objekten zu lesen. Die Trägerfläche ist mit einem Mittel zur Bewegung der Objekte entlang einer Transportrichtung ausgestattet. Die Vorrichtung besitzt einen Laserstrahlscanner, der moduliertes Licht abgibt, eine mit dem Scanner verbundene Datenverarbeitungseinheit, erste Scanmittel zur Erzeugung wenigstens eines ersten Scans in einer ersten Scanebene, um den augenblicklichen Abstand wenigstens eines Punktes auf der Oberfläche jedes der Objekte zu dem Scanner zu messen, zweite Scanmittel, um mehrere zweite Scans in einer zweiten, von der ersten verschiedenen Scanebene zur erzeugen, um den optischen Code auf dem Objekt zu lesen, und ein Mittel zur Anpassung der Fokussierung des Laserstrahls entsprechend dem mit dem ersten Scan gemessenen Abstand.

In US-A-5 426 288 sind ein Leseverfahren für optische Informationen und eine entsprechende Vorrichtung beschrieben, die die Erzeugung von fehlerhaften Erfassungen dadurch verhindern, dass ein Bereich für eine zuverlässige Ablesung für einen Barcode oder ähnliche Informationen spezifiziert wird. Ein Mikrocomputer berechnet den Abstand zwischen der Position einer Reflexion von Laserlicht von dem Barcode und einer Position, an der dasselbe Laserlicht in die Scaneinheit eintritt, auf der Basis eines Zeitabstands zwischen der Abgabe des Laserlichts und dem Empfang des reflektierten Laserlichts. Der Mikrocomputer bestimmt, durch das Berechnungsverfahren, dass der Barcode innerhalb eines geeigneten Leseabstands liegt, nur dann, wenn der berechnete Abstand als innerhalb des gesetzten Lesebereichs liegend erkannt wird, und erlaubt ein Scannen des Barcodes.

US-A-5,900,611 zeigt eine Vorrichtung zur Erkennung von Codes mit einem Lichtsender zur Aussendung von kohärentem sichtbarem Licht in Richtung eines Scanbereichs und einem Lichtempfänger zum Empfang eines aus dem Scanbereich remittierten Lichtsignals zur Erkennung eines Codes. Eine zweite Lichtquelle im nicht-sichtbaren Bereich dient zusammen mit einem positionsempfindlichen Detektor zur Abstandsmessung.

Nachteilig am Stand der Technik ist die Tatsache, dass Codeleser und Lichtschranke zwei separate, mit Abstand zueinander zu montierende Einheiten darstellen, so dass für die Gesamtanordnung vergleichsweise viel Raum beansprucht wird und darüber hinaus auch eine exakt zueinander justierte Montage der beiden Einheiten erforderlich ist.

Eine Aufgabe der Erfindung besteht darin, eine Vorrichtung bzw. ein Verfahren der eingangs genannten Art derart weiterzubilden, dass sowohl der Justageaufwand als auch der beanspruchte Montageraum reduziert wird.

Die Aufgabe wird gelöst durch eine Vorrichtung mit den Merkmalen des Anspruchs 1 und ein Verfahren mit den Merkmalen des Anspruchs 7.

Mit einer erfindungsgemäßen Vorrichtung wird diese Aufgabe insbesondere dadurch gelöst, dass eine die Triggerschaltung beaufschlagende Abstandsermittlungs- oder Bilderfassungseinheit zur Erfassung eines im Scanbereich vorhandenen Objekts in die Vorrichtung integriert ist. Durch ein erfindungsgemäßes Verfahren wird die Aufgabe dadurch gelöst, dass die Triggerschaltung von einer in den Codeleser integrierten Abstandsermittlungs- oder Bilderfassungseinheit zur Erfassung eines im Scanbereich vorhandenen Objekts beaufschlagt wird.

Erfindungsgemäß wird also die aus dem Stand der Technik bekannte externe Lichtschranke durch eine Abstandsermittlungs- oder Bilderfassungseinheit ersetzt, welche in die Vorrichtung bzw. den Codeleser integriert ist. Da somit der Codeleser und die Abstandsermittlungs- oder Bilderfassungseinheit als eine einzige Baugruppe ausgebildet sind, lässt sich der beanspruchte Raumbedarf reduzieren. Zudem können sämtliche erforderlichen Justagevorgänge zwischen dem Codeleser und der Abstandsermittlungs- oder Bilderfassungseinheit bereits werksseitig bei der Montage der Gesamtbaugruppe vorgenommen werden, so dass diesbezügliche Justagearbeiten bei der Installation der Baugruppe vor Ort entfallen.

Weiterhin ist die erfindungsgemäß vorgesehene Abstandsermittlungs- oder Bilderfassungseinheit dazu in der Lage, detailliertere Informationen über ein erkanntes Objekt zu liefern, als dies mit einer Lichtschranke gemäß Stand der Technik möglich war, die lediglich melden konnte, ob das Objekt vorhanden ist oder nicht. Erfindungsgemäß lassen sich nämlich zusätzlich Informationen über Größe, Form, Bewegungsrichtung, Geschwindigkeit, Farbe, etc. des Objekts ermitteln und auswerten.

Darüber hinaus erfolgt eine Abstandsermittlung in einem Teil des Scanbereichs oder im gesamten Scanbereich, so dass nicht nur ein einzelner Abstandswert, sondern ein zwei- oder dreidimensionales Abstandsprofil ermittelbar ist. In welchem örtlichen und/oder zeitlichen Raster die einzelnen Abstandswerte eines Abstandsprofils ermittelt werden, kann individuell festgelegt werden. Ein grobes Raster führt dabei zu einer erhöhten Auswertungsgeschwindigkeit, die jedoch zu Lasten der Genauigkeit geht. Ein feineres Raster verlangsamt die Auswertegeschwindigkeit, bietet jedoch eine höhere Genauigkeit.

Durch die erfindungsgemäße Ausführung der Gesamtanordnung als lediglich eine einzelne Baugruppe wird zudem Wartung und Service sowie ein Auswechseln der Gesamtanordnung vereinfacht.

Vorteilhaft ist es, wenn Lichtsender, Lichtempfänger, Steuer- und Auswerteeinheit des Codelesers und Abstandsermittlungs- oder Bilderfassungseinheit in einem gemeinsamen Gehäuse angeordnet sind. Die Anordnung in einem gemeinsamen Gehäuse ermöglicht auf einfache Weise die erfindungsgemäße Lösung, dass nur ein Lichtsender und/oder nur ein Lichtempfänger vorgesehen sind, die sowohl von der Abstandsermittlungs- oder Bilderfassungseinheit genutzt als auch von der Steuer- und Auswerteeinheit zur Codeermittlung angesteuert werden. Die Realisierung der Gesamtanordnung mit einem einzigen Lichtsender und einem einzigen Lichtempfänger führt dazu, dass zum einen die Herstellkosten reduziert und zum anderen Justagearbeiten zwischen Codeermittlungseinheit und Abstandsermittlungs- oder Bilderfassungseinheit vollkommen überflüssig werden, da die Verwendung eines gemeinsamen Lichtsenders und eines gemeinsamen Lichtempfängers sicherstellt, dass beide Einheiten das gleiche Blickfeld bzw. den gleichen Scanbereich erfassen.
Alternativ ist es jedoch auch möglich, mehr als einen Lichtsender und nur einen Lichtempfänger, mehr als einen Lichtsender und mehr als einen Lichtempfänger oder nur einen Lichtsender und mehr als einen Lichtempfänger einzusetzen. Wenn mehrere Lichtsender bzw. Lichtempfänger vorgesehen werden, können mehrere Lichtsender, die z.B. mit verschiedenen Wellenlängen arbeiten, sowohl von der Abstandsermittlungs- oder Bilderfassungseinheit als auch vom Codeleser genutzt werden und/oder es können mehrere Lichtempfänger, die z.B. verschiedene Fokuseinstellungen besitzen, sowohl von der Abstandsermittlungs- oder Bilderfassungseinheit als auch vom Codeleser genutzt werden.

Bevorzugt erfolgt die Beendigung der Codeermittlung in Abhängigkeit von den von der Abstandsermittlungs- oder Bilderfassungseinheit gelieferten Abstands- oder Bildwerten, so dass letztlich ein von diesen gelieferten Werten abhängiges, zeitlich begrenztes Lesetor generiert wird. Dieses Lesetor kann folglich so eingestellt werden, dass es immer dann geöffnet ist, wenn sich ein Objekt im Scanbereich befindet.
Alternativ ist es auch möglich, das Lesetor für die Codeermittlung nach einem vorbestimmten, sich an die Auslösung der Codeermittlung anschließenden Zeitintervall zu beenden. Dieses Zeitintervall kann dabei so eingestellt werden, dass sich das Lesetor mit hoher Wahrscheinlichkeit über denjenigen Zeitraum erstreckt, in dem sich ein Objekt im Scanbereich befindet.

Von Vorteil ist es, wenn ein Signalausgang zur Bereitstellung von aus den gelieferten Abstands- oder Bildwerten ermittelten Informationen bezüglich eines im Scanbereich vorhandenen Objektes vorgesehen ist. Über diesen Signalausgang können Informationen über ein erkanntes Objekt an weitere Vorrichtungen gleicher oder anderer Art übermittelt werden. Ein konkreter Anwendungsfall wird im Rahmen der Figurenbeschreibung noch erläutert.

Weiterhin ist es bevorzugt, wenn eine Einheit zur Ermittlung der Geschwindigkeit eines sich im Scanbereich bewegenden Objektes aus den in zeitlicher Abfolge von der Abstandsermittlungs- oder Bilderfassungseinheit gelieferten Abstands- oder Bildwerten vorgesehen ist. Aus der mit einer solchen Einheit ermittelten Geschwindigkeit lässt sich beispielsweise bestimmen, wann ein Lesetor sinnvollerweise beginnt und endet, vorausgesetzt, dass sich das erkannte Objekt mit zumindest weitgehend konstanter Geschwindigkeit bewegt.

Die erfindungsgemäß in den Codeleser integrierte Abstandsermittlungsschaltung kann bevorzugt eine Fokussiereinheit zur Fokussierung einer dem Lichtsender und/ oder dem Lichtempfänger zugeordneten Sende- und / oder Empfangsoptik auf ein im Scanbereich vorhandenes Objekt beaufschlagen. So kann sichergestellt werden, dass der Fokus immer optimal an den aktuell vorliegenden Abstand zwischen Objekt und Codeleser angepasst ist.

Die Fokussierung kann dabei vor oder gleichzeitig mit der Auslösung der Codeermittlung initiiert werden. Wenn die Fokussierung vor der Auslösung der Codeermittlung initiiert wird, ist von Vorteil, dass der bei der Codeermittlung vorliegende Abstand zwischen Objekt und Codeleser vorausberechnet und der Fokus vorab bereits korrekt eingestellt werden kann, so dass unmittelbar bei Beginn der Codeermittlung bereits der korrekte Fokus eingestellt ist.

Weiterhin ist es möglich, die Fokussiereinheit während einer Codeermittlung automatisch auf verschiedene, aufeinanderfolgende, alle möglichen Leseabstände abdeckende Abstandswerte einzustellen. Diese Ausführungsform der Erfindung wird im Rahmen der Figurenbeschreibung noch näher erläutert.

Besonders bevorzugt ist es, wenn vor der Codeermittlung ein zwei- oder dreidimensionales Hintergrundprofil eingelernt und im Rahmen der Codeermittlung das Differenzprofil zwischen dem aktuell ermittelten zwei- oder dreidimensionalen Abstandsprofil und dem eingelernten Hintergrundprofil ausgewertet wird. Auf diese Weise wird es möglich, in Behältern befindliche Gegenstände zuverlässig zu erkennen, ohne daß der Behälter störende Abstandswerte liefert, da die Behälterform vorab als Hintergrundprofil eingelernt werden kann. Vorteilhaft ist ferner, daß auf die beschriebene Art und Weise auch erkannt werden kann, ob sich in einem Behälter ein Objekt befindet oder nicht, und zwar unabhängig davon, ob anschließend ein Code gelesen werden kann oder nicht.

Für die Fokussierung kann in letztgenanntem Fall das Differenzprofil, insbesondere der Minimalwert des Differenzprofils herangezogen werden. Versuche haben gezeigt, daß hier die Verwendung des Minimalwerts, der meist der Oberseite des Objekts entspricht, zu einem guten Ergebnis führt, da der Fokus dann in der Regel so eingestellt ist, daß ein auf der Oberseite eines Objekts befindlicher Code gelesen werden kann.

Die erfindungsgemäße Abstandsermittlungs- oder Bilderfassungseinheit wird bevorzugt nicht ständig, sondern lediglich zyklisch aktiviert, so daß durch die eingeschalteten Pausen die einzelnen Komponenten der Vorrichtung, insbesondere die Fokussiereinheit oder der vorzugsweise als Laserdiode ausgebildete Lichtsender nicht zu schnell altern.

Weitere bevorzugte Ausführungsformen der Erfindung sind in den Unteransprüchen genannt.

Die Erfindung wird nachfolgend anhand von Ausführungsbeispielen unter Bezugnahme auf die Zeichnungen erläutert; in diesen zeigen:
- Fig. 1: eine schematische Seitenansicht einer erfindungsgemäßen Vorrichtung mit zwei im Scanbereich befindlichen Objekten,
- Fig. 2: eine schematische Seitenansicht einer erfindungsgemäßen Vorrichtung zur Erkennung von Objekten innerhalb eines Behälters,
- Fig. 3: gemäß einem erfindungsgemäßen Verfahren ermittelte Abstandsprofile,
- Fig. 4: eine Kennlinie für die Fokussiereinheit, bei der die Fokuslage über dem Leseabstand aufgetragen ist, und
- Fig. 5: eine schematische Seitenansicht von zwei auf einem Förderband transportierten Gegenständen, die von drei beabstandet zueinander angeordneten erfindungsgemäßen Vorrichtungen erfaßbar sind.

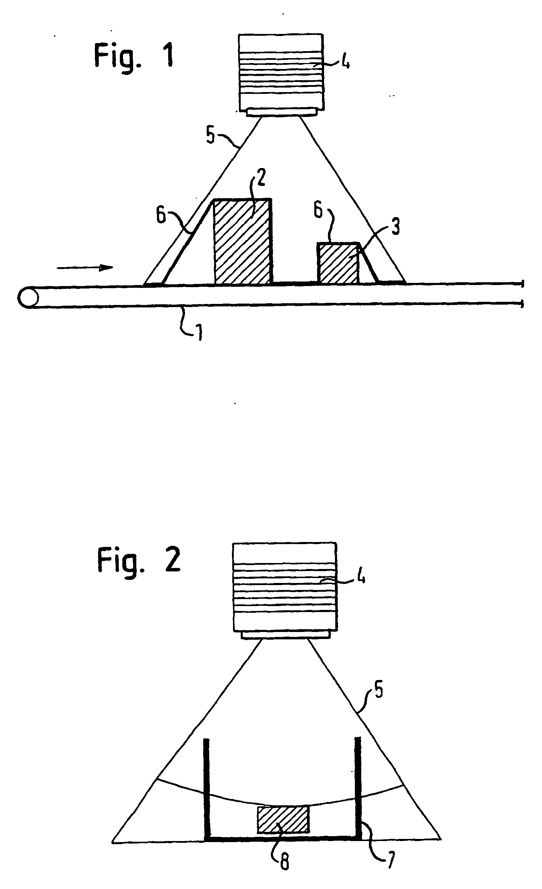

Fig. 1 zeigt zwei auf einem Förderband 1 in Pfeilrichtung transportierte Objekte 2, 3. Oberhalb des Förderbands 1 ist eine erfindungsgemäße Vorrichtung 4 angeordnet, welche sowohl eine Cadeermittlungseinheit als auch eine Abstandsermittlungseinheit umfaßt.

Beide Einheiten besitzen das gleiche Blickfeld und erfassen somit den gleichen, in Fig. 1 als Lichtkegel dargestellten Scanbereich 5.

Die Abstandsermittlungseinheit ist dazu in der Lage, ein Abstandsprofil 6 zu erkennen. Dieses Abstandsprofil 6 wird in einer in der Vorrichtung 4 enthaltenen Auswerteeinheit daraufhin untersucht, ob sich Objekte 2, 3 im Scanbereich 5 befinden oder nicht. Im vorliegenden Fall kann durch den Verlauf des Abstandsprofils 6 erkannt werden, daß sich ein größeres Objekt 2 und ein kleineres Objekt 3 im Scanbereich 5 befinden. Zudem kann aus dem Abstandsprofil berechnet werden, in welchem Abstand sich die beiden Objekte 2, 3 zur Vorrichtung 4 befinden, so daß innerhalb der Vorrichtung 4 eine entsprechende Fokussierung auf die Objekte 2, 3 vorgenommen werden kann. Sofern sich auf der Oberseite der Objekte 2, 3 Codes befinden, können diese dann von der Vorrichtung 4 mit korrekt eingestelltem Fokus problemlos erkannt werden.

Falls das ermittelte Abstandsprofil 6 einen Verlauf zeigt, der darauf schließen läßt, daß sich keinerlei Objekte 2, 3 im Scanbereich 5 befinden, wird erfindungsgemäß keine Codelesung ausgelöst, so daß letztlich immer nur dann versucht wird, einen Code zu erkennen, wenn sich tatsächlich auch ein Objekt 2, 3 im Scanbereich 5 befindet.

Dadurch daß sich die Abstandsermittlungseinheit, die optional auch als Bilderfassungseinheit ausgebildet werden kann, innerhalb des Gehäuses der Vorrichtung 4 befindet, ist es nicht nötig, die Codeleseeinheit und die Abstandsermittlungseinheit zueinander zu justieren. Zudem wird für die Vorrichtung 4 nur ein geringer Platzbedarf benötigt.

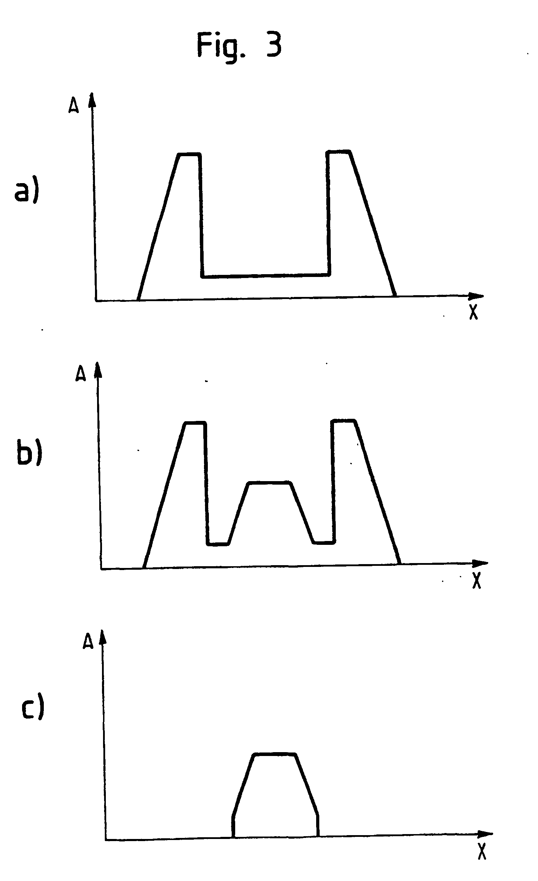

Fig. 2 zeigt eine Vorrichtung 4 gemäß Fig. 1 mit einem Scanbereich 5, wobei sich gemäß Fig. 2 im Scanbereich 5 ein Behälter 7 befindet, in welchem ein Objekt 8 aufgenommen ist. Bei derartigen Anordnungen war es gemäß Stand der Technik schwierig, das Objekt 8 vom Behälter 7 zu unterscheiden, was dazu führte, daß versucht wurde, Codes auch dann zu lesen, wenn im Behälter 7 kein Objekt vorhanden ist. Erfindungsgemäß ist es nun jedoch möglich, vor der Codeermittlung ein Hintergrundprofil einzulernen, welches die Form des Behälters 7 repräsentiert. Dieses Hintergrundprofil kann dann vom aktuell ermittelten Abstandsprofil subtrahiert werden, so daß das auf diese Weise ermittelte Differenzprofil keine Hintergrundinformation, sondern nur noch Objektinformation beinhaltet. Entsprechende Profilverläufe sind in den Fig. 3a bis 3c dargestellt.

Fig. 3a zeigt den Verlauf des Hintergrundprofils, welches einen leeren Behälter 7 charakterisiert. Fig. 3b zeigt den Verlauf eines aktuellen Abstandsprofils eines mit einem Objekt 8 gefüllten Behälters 7, und Fig. 3c zeigt die Differenz zwischen dem Profil gemäß Fig. 3b und dem Profil gemäß Fig. 3a. Der Verlauf dieses Differenzprofils gemäß Fig. 3c läßt klar erkennen, daß das Differenzprofil nur noch Informationen über das Objekt 8, jedoch keine Information über den Behälter 7 beinhaltet. Insofern kann aufgrund des Differenzprofils zum einen problemlos erkannt werden, ob ein gefüllter oder ein leerer Behälter 7 vorliegt. Zum anderen ist der Abstand des Objektes 8 zur Vorrichtung 4 (Fig. 2) aus dem Differenzprofil ermittelbar, so daß der Fokus bezogen auf das Objekt 8 korrekt eingestellt werden kann.

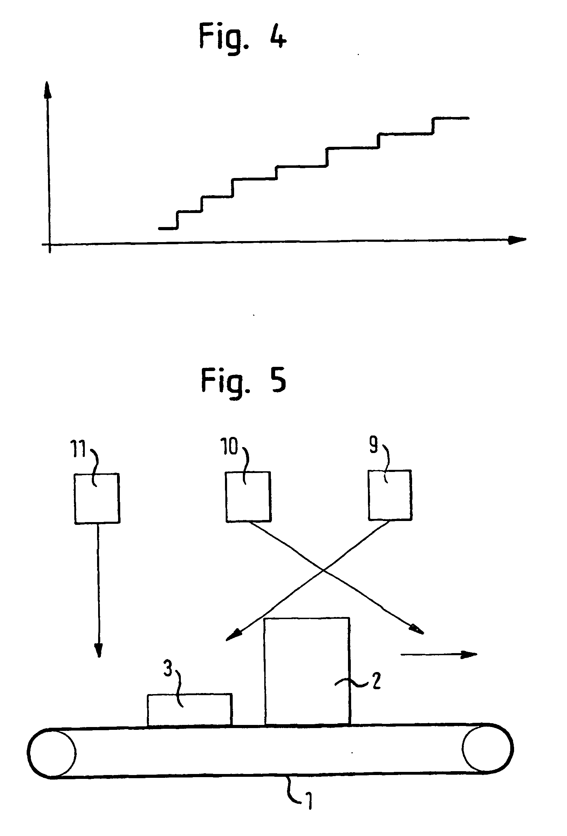

Die Kennlinie für die Fokussiereinheit gemäß Fig. 4 zeigt einen treppenförmigen Verlauf, was bedeutet, daß für einen bestimmten Leseabstandsbereich jeweils eine konstante Fokuslage eingestellt werden kann. Alternativ ist es natürlich auch möglich, die Fokuslage kontinuierlich mit dem Leseabstand zu verändern. Die Kennlinie gemäß Fig. 4 kommt insbesondere dann zum Einsatz, wenn die Fokussiereinheit während einer einzelnen Codeermittlung automatisch auf verschiedene Werte eingestellt wird. Es können beispielsweise die in Fig. 4 dargestellten acht Werte während der Ermittlung eines Codes nacheinander eingestellt werden, so daß alle möglichen Leseabstände abgedeckt sind und bei einer der acht Einstellungen die korrekte Fokussierung vorliegt und ein Code ermittelt werden kann. Dabei können die verschiedenen Fokuslagen gemäß Fig. 4 in einer zeitlich beliebigen Reihenfolge angefahren werden.

Fig. 5 zeigt zwei Objekte 2, 3, welche auf einem Förderband 1 in Pfeilrichtung transportiert werden. Oberhalb des Förderbands befinden sich insgesamt drei erfindungsgemäße Vorrichtungen 9, 10, 11, von denen jede dazu in der Lage ist, einen Code zu ermitteln und auch ein Abstandsprofil zu bestimmen. Die Blickrichtungen der beiden Vorrichtungen 9, 10 kreuzen sich und verlaufen somit schräg zur Förderebene, während die Blickrichtung der Vorrichtung 11 senkrecht zur Förderebene nach unten gerichtet ist.

Die Vorrichtungen 10 und 11 weisen jeweils einen Signalausgang zur Bereitstellung von aus den gelieferten Abstandswerten ermittelter Information bezüglich eines im jeweiligen Scanbereich vorhandenen Objektes auf, über welchen die genannten Informationen an die jeweils anderen Vorrichtungen 9, 10, 11 übermittelt werden können.

Konkret ist es bei der Anordnung gemäß Fig. 5 so, daß die Vorrichtung 9 die in Förderrichtung transportierten Objekte 2, 3 vor der Vorrichtung 10 "sieht" bzw. deren Abstandsprofile ermittelt, so daß die diesbezügliche Information an die Vorrichtung 10 übermittelt werden kann, bevor die Objekte 2, 3 in den Scanbereich der Vorrichtung 10 gelangen. Dies bedingt auf vorteilhafte Weise, daß das Lesetor der Vorrichtung 10 aus der bekannten Geschwindigkeit des Förderbands 1 und dem von der Vorrichtung 9 ermittelten Abstandsprofil korrekt berechnet werden kann. Zudem kann der Fokus der Vorrichtung 10 auch bereits vor Ort auf der Basis der von der Vorrichtung 9 gelieferten Abstandswerte eingestellt werden. Falls die Geschwindigkeit des Förderbands 1 nicht bekannt ist, kann diese Geschwindigkeit alternativ auch durch die zeitliche Veränderung der ermittelten Abstandsprofile berechnet werden.

Eine zusätzliche Verbesserung wird erzielt, wenn vorab bereits die Vorrichtung 11 die Objekte 2, 3 erkennt bzw. deren Abstandsprofile ermittelt. Die Vorrichtung 11 kann diese Informationen dann an die Vorrichtungen 9 und 10 weitergeben, so daß die Lesetore der Vorrichtungen 9 und 10 sowie die Fokuslagen dieser Vorrichtungen bereits korrekt berechnet werden können, bevor die Objekte 2, 3 in den Scanbereich dieser Vorrichtungen 9, 10 gelangen. Die Vorrichtungen 9, 10 können dann beide zur Codeerkennung herangezogen werden, wobei die durch die beiden Vorrichtungen erfolgende doppelte Codeerkennung eine zusätzliche Sicherheit bei der Korrektheit der Codeerkennung bietet.

Zudem ist es möglich, daß auch bereits die Vorrichtung 11 versucht, den auf den Objekten 2, 3 jeweils befindlichen Code zu erkennen. Falls von der Vorrichtung 11 ein Code erkannt wurde und darauf verzichtet wird, die Sicherheit der Codeerkennung durch nochmaliges Lesen durch die Vorrichtungen 9 und/oder 10 zu erhöhen, müssen die Vorrichtungen 9, 10 anschließend nicht mehr aktiviert werden, d.h., die Vorrichtung 11 kann über deren Signalausgang eine Information liefern, gemäß derer die Vorrichtungen 9, 10 keine Lesetore mehr öffnen müssen.

## Patentansprüche

1. Vorrichtung zur Erkennung von Codes mit mindestens einem Lichtsender zur Aussendung von Lichtsignalen in Richtung eines Scanbereichs (5), mindestens einem Lichtempfänger zum Empfang eines aus dem Scanbereich (5) remittierten Lichtsignals, sowie einer Steuer- und Auswerteeinheit zur Ansteuerung von Lichtsender und Lichtempfänger und zur Ermittlung eines Codes aus dem empfangenen Lichtsignal, wobei
- die Steuer- und Auswerteeinheit eine die Ermittlung eines Codes auslösende Triggerschaltung umfasst,
- eine die Triggerschaltung beaufschlagende Abstandsermittlungs- oder Bilderfassungseinheit zur Erfassung eines im Scanbereich (5) vorhandenen Objekts (2, 3, 8) in die Vorrichtung (4) integriert ist, und
- nur ein Lichtsender vorgesehen ist, der sowohl von der Abstandsermittlungs- oder Bilderfassungseinheit genutzt als auch von der Steuer- und Auswerteeinheit zur Codeermittlung angesteuert wird, und/oder nur ein Lichtempfänger vorgesehen ist, der sowohl von der Abstandsermittlung- oder Bilderfassungseinheit genutzt als auch von der Steuer- und Auswerteeinheit zur Codeermittlung angesteuert wird,
**dadurch gekennzeichnet, dass**
die Abstandsermittlungs- oder Bilderfassungseinheit derart ausgestaltet ist, dass eine Abstandsermittlung in einem Teil des Scanbereichs (5) oder im gesamten Scanbereich (5) derart erfolgt, dass ein zwei- oder dreidimensionales Abstandsprofil ermittelbar ist.

2. Vorrichtung nach Anspruch 1,
**dadurch gekennzeichnet,**
**dass** Lichtsender, Lichtempfänger, Steuer- und Auswerteeinheit und Abstandsermittlungs- oder Bilderfassungseinheit in einem gemeinsamen Gehäuse angeordnet sind.

3. Vorrichtung nach einem der vorangehenden Ansprüche,
**dadurch gekennzeichnet,**
**dass** die Triggerschaltung auch zur in Abhängigkeit von den von der Abstandsermittlungs- oder Bilderfassungseinheit gelieferten Abstands- oder Bildwerten erfolgenden Beendigung der Codeermittlung ausgelegt ist, so dass die Triggerschaltung letztlich ein von den gelieferten Abstands- oder Bildwerten abhängiges, zeitlich begrenztes Lesetor generiert.

4. Vorrichtung nach einem der vorangehenden Ansprüche,
**dadurch gekennzeichnet,**
**dass** eine Fokussiereinheit zur Fokussierung einer dem Lichtsender und/oder dem Lichtempfänger zugeordneten Sende- und/oder Empfangsoptik auf ein im Scanbereich (5) vorhandenes Objekt (2, 3, 8) vorgesehen ist, welche von der Abstandsermittlungs- oder Bilderfassungseinheit beaufschlagt ist.

5. Vorrichtung nach einem der vorangehenden Ansprüche,
**dadurch gekennzeichnet,**
**dass** ein Signalausgang zur Bereitstellung von aus den gelieferten Abstands- oder Bildwerten ermittelter Information bezüglich eines im Scanbereich (5) vorhandenen Objektes (2, 3, 8) vorgesehen ist.

6. Vorrichtung nach einem der vorangehenden Ansprüche,
**dadurch gekennzeichnet**,
eine Einheit zur Ermittlung der Geschwindigkeit eines sich im Scanbereich (5) bewegenden Objektes (2, 3, 8) aus den in zeitlicher Abfolge von der Abstandsermittlungs- oder Bilderfassungseinheit gelieferten Abstands- oder Bildwerten vorgesehen ist.

7. Verfahren zur Erkennung von Codes mittels eines Codelesers (4), bei dem von einem Lichtsender Lichtsignale in Richtung eines Scanbereichs (5) ausgesandt werden, die Lichtsignale aus dem Scanbereich (5) zu einem Lichtempfänger remittiert werden, das Ausgangssignal des Lichtempfängers einer Steuer- und Auswerteeinheit zur Ansteuerung von Lichtsender und Lichtempfänger und zur Ermittlung eines Codes aus dem empfangenen Lichtsignal zugeführt werden, wobei
- die Ermittlung eines Codes von einer der Steuer- und Auswerteeinheit zugeordneten Triggerschaltung ausgelöst wird, die von einer in den Codeleser (4) integrierten Abstandsermittlungs- oder Bilderfassungseinheit zur Erfassung eines im Scanbereich (5) vorhandenen Objekts (2, 3, 8) beaufschlagt wird, und
- sowohl zur Abstands- oder Bildermittlung als auch zur Codeermittlung derselbe Lichtsender genutzt wird oder sowohl zur Abstands- oder Bildermittlung als auch zur Codeermittlung derselbe Lichtempfänger genutzt wird oder sowohl zur Abstands- oder Bildermittlung als auch zur Codeermittlung jeweils derselbe Lichtsender und derselbe Lichtempfänger genutzt werden,
**dadurch gekennzeichnet, dass**
mit der Abstandsermittlungs- oder Bilderfassungseinheit eine Abstandsermittlung in einem Teil des Scanbereichs (5) oder im gesamten Scanbereich (5) derart erfolgt, dass ein zwei- oder dreidimensionales Abstandsprofil ermittelbar ist, und ein zwei- oder dreidimensionales Abstandsprofil ermittelt wird.

8. Verfahren nach Anspruch 7,
**dadurch gekennzeichnet,**
**dass** die Beendigung der Codeermittlung in Abhängigkeit von den von der Abstandsermittlungs- oder Bilderfassungseinheit gelieferten Abstands- oder Bildwerten erfolgt, so dass letztlich ein von den gelieferten Abstands- oder Bildwerten abhängiges, zeitlich begrenztes Lesetor generiert wird.

9. Verfahren nach Anspruch 7,
**dadurch gekennzeichnet,**
**dass** die Beendigung der Codeermittlung nach einem vorbestimmten, sich an die Auslösung der Codeermittlung anschließenden Zeitintervall erfolgt.

10. Verfahren nach einem der Ansprüche 7 bis 9,
**dadurch gekennzeichnet,**
**dass** die Abstandsermittlungseinheit eine Fokussiereinheit zur Fokussierung einer dem Lichtsender und/ oder dem Lichtempfänger zugeordneten Sende- und/oder Empfangsoptik auf ein im Scanbereich (5) vorhandenes Objekt (2, 3, 8) beaufschlagt.

11. Verfahren nach Anspruch 10,
**dadurch gekennzeichnet,**
**dass** die Fokussierung vor oder gleichzeitig mit der Auslösung der Codeermittlung initiiert wird.

12. Verfahren nach einem der Ansprüche 10 oder 11,
**dadurch gekennzeichnet,**
**dass** die Fokussiereinheit während einer Codeermittlung automatisch auf verschiedene, aufeinanderfolgende, alle möglichen Leseabstände abdeckende Abstandswerte eingestellt wird.

13. Verfahren nach einem der Ansprüche 7 bis 12,
**dadurch gekennzeichnet,**
**dass** über einen Signalausgang aus den gelieferten Abstands- oder Bildwerten ermittelte Information bezüglich eines im Scanbereich (5) vorhandenen Objektes (2, 3, 8) an weitere Vorrichtungen (9, 10) zur Erkennung eines Codes geliefert wird.

14. Verfahren nach Anspruch 7,
**dadurch gekennzeichnet,**
**dass** vor der Codeermittlung ein zwei- oder dreidimensionales Hintergrundprofil (Fig. 3a) eingelernt und im Rahmen der Codeermittlung das Differenzprofil (Fig. 3c) zwischen dem aktuell ermittelten zwei- oder dreidimensionalen Abstandsprofil (Fig. 3b) und dem eingelernten Hintergrundprofil ausgewertet wird.

15. Verfahren nach Anspruch 14,
**dadurch gekennzeichnet,**
**dass** für die Fokussierung das Differenzprofil, insbesondere der Minimalwert des Differenzprofils herangezogen wird.

16. Verfahren nach einem der Ansprüche 7 bis 15,
**dadurch gekennzeichnet,**
**dass** die Abstandsermittlungseinheit zyklisch aktiviert wird.

## Claims

1. An apparatus for the recognition of codes comprising at least one light transmitter for the transmission of light signals in the direction of a scanning region (5), at least one light receiver for the reception of a light signal remitted from the scanning region (5) and a control and evaluation unit for the control of the light transmitter and the light receiver and for the determination of a code from the light signal received, wherein
- the control and evaluation unit includes a trigger circuit triggering the determination of a code,
- a distance determination unit or image detection unit acting on the trigger circuit is integrated into the apparatus (4) for the detection of an object (2, 3, 8) present in the scanning region (5), and
- only one light transmitter is provided, which is both used by the distance determination unit or image detection unit and is controlled by the control and evaluation unit for the code determination, and/or only one light receiver is provided which is both used by the distance determination unit or image detection unit and is controlled by the control and evaluation unit for the code determination,
**characterized in that**
the distance determination unit or image detection unit is designed such that a distance determination takes place in a part of the scanning region (5) or in the total scanning region (5) such that a two-dimensional or three-dimensional distance profile can be determined.

2. An apparatus in accordance with claim 1, **characterized in that** the light transmitter, light receiver, control and evaluation unit and distance determination unit or image detection unit are arranged in a common housing.

3. An apparatus in accordance with any one of the preceding claims, **characterized in that** the trigger circuit is also designed for the ending of the code determination taking place in dependence on the distance values or image values supplied by the distance determination unit or image detection unit so that the trigger circuit ultimately generates a time-limited read gate dependent on the supplied distance values or image values.

4. An apparatus in accordance with any one of the preceding claims, **characterized in that** a focusing unit is provided for focusing an optical transmission system and/or an optical reception system associated with the light transmitter and/or the light receiver onto an object (2, 3, 8) present in the scanning region (5) and is acted on by the distance determination unit or image detection unit.

5. An apparatus in accordance with any one of the preceding claims, **characterized in that** a signal output is provided for the making available of information determined from the supplied distance values or image values with respect to an object (2, 3, 8) present in the scanning region (5).

6. An apparatus in accordance with any one of the preceding claims, **characterized in that** a unit is provided for the determination of the speed of an object (2, 3, 8) moving in the scanning region (5) from the distance values or image values supplied in time sequence from the distance determination unit or image detection unit.

7. A method for the recognition of codes by means of a code reader (4), in which light signals are transmitted by a light transmitter in the direction of a scanning region (5), the light signals are remitted from the scanning region (5) to a light receiver, the output signal of the light receiver is supplied to a control and evaluation unit for the control of the light transmitter and the light receiver and for the determination of a code from the received light signal, wherein
- the determination of a code is triggered by a trigger circuit associated with the control and evaluation unit and is acted on by a distance determination unit or image detection unit integrated into the code reader (4) for the detection of an object (2, 3, 8) present in the scanning region (5), and
- the same light transmitter is used for both the distance or image determination and for the code determination or the same light receiver is used for both the distance or image determination and for the code determination or the same light transmitter and the same light receiver are respectively used for both the distance or image determination and for the code determination,
**characterized in that**
a distance determination using the distance determination unit or image detection unit takes place in a part of the scanning region (5) or in the total scanning region (5) such that a two-dimensional or three-dimensional distance profile can be determined and a two-dimensional or three-dimensional distance profile is determined.

8. A method in accordance with claim 7, **characterized in that** the ending of the code determination takes place in dependence on the distance values or image values supplied from the distance determination unit or image detection unit, so that ultimately a time-limited read gate is generated which is dependent on the distance values or image values supplied.

9. A method in accordance with claim 7, **characterized in that** the ending of the code determination takes place after a pre-determined time interval which is subsequent to the triggering of the code determination.

10. A method in accordance with any one of the claims 7 to 9, **characterized in that** the distance determination unit acts on a focusing unit for the focusing of an optical transmission system and/or an optical reception system associated with the light transmitter and/or the light receiver onto an object (2, 3, 8) present in the scanning region (5).

11. A method in accordance with claim 10, **characterized in that** the focusing is initiated before or simultaneously with the triggering of the code determination.

12. A method in accordance with any one of the claims 10 or 11, **characterized in that** the focusing unit is automatically set to different, successive distance values covering all possible read distances during a code determination.

13. A method in accordance with any one of the claims 7 to 12, **characterized in that** information with respect to an object (2, 3, 8) present in the scanning region (5) determined via a signal output from the supplied distance values or image values is supplied to further apparatuses (9, 10) for the recognition of a code.

14. A method in accordance with claim 7, **characterized in that** a two or three dimensional background profile (Fig. 3a) is taught/learned prior to the code determination and the difference profile (Fig. 3c) between the momentarily determined two-dimensional or three-dimensional distance profile (Fig. 3b) and the taught/learned background profile is evaluated as part of the code determination.

15. A method in accordance with claim 14, **characterized in that** the difference profile, in particular the minimum value of the difference profile, is used for focusing.

16. A method in accordance with any one of the claims 7 to 15, **characterized in that** the distance determination unit is activated cyclically.

## Revendications

1. Dispositif de reconnaissance de codes comportant au moins un émetteur de lumière pour émettre des signaux lumineux en direction d'une zone de scannage (5), au moins un récepteur de lumière pour recevoir un signal lumineux réémis depuis la zone de scannage (5), ainsi qu'une unité de commande et d'évaluation pour piloter l'émetteur de lumière et le récepteur de lumière et pour déterminer un code depuis le signal lumineux reçu, dans lequel
- l'unité de commande et d'évaluation comprend un circuit déclencheur qui déclenche la détermination d'un code,
- une unité de détermination d'espace ou de détection d'image sollicitée par le circuit déclencheur pour détecter un objet (2, 3, 8) se trouvant dans la zone de scannage (5) est intégrée dans le dispositif (4), et
- il n'est prévu qu'un seul émetteur de lumière qui est aussi bien utilisé par l'unité de détermination d'espace ou de détection d'image que piloté par l'unité de commande et d'évaluation pour déterminer le code, et/ou il n'est prévu qu'un récepteur de lumière qui est aussi bien utilisé par l'unité de détermination d'espace ou de détection d'image que piloté par l'unité de commande et d'évaluation pour déterminer le code.
**caractérisé en ce que**
l'unité de détermination d'espace ou de détection d'image est réalisée de telle sorte qu'une détermination d'espace a lieu dans une partie de la zone de scannage (5) ou dans toute la zone de scannage (5) de telle sorte qu'il est possible de déterminer un profil d'espace bidimensionnel ou tridimensionnel.

2. Dispositif selon la revendication 1,
**caractérisé en ce que**
l'émetteur de lumière, le récepteur de lumière, l'unité de commande et d'évaluation et l'unité de détermination d'espace ou de détection d'image sont agencés dans un boîtier commun.

3. Dispositif selon l'une des revendications précédentes,
**caractérisé en ce que**
le circuit déclencheur est conçu aussi pour terminer la détermination de code se produisant en fonction des valeurs d'espace ou d'image fournies par l'unité de détermination d'espace ou de détection d'image, de telle sorte que le circuit déclencheur génère finalement une porte de lecture limitée dans le temps en fonction des valeurs d'espace ou d'image fournies.

4. Dispositif selon l'une des revendications précédentes,
**caractérisé en ce que**
il est prévu une unité de focalisation pour focaliser une optique émettrice et/ou réceptrice associée à l'émetteur de lumière et/ou au récepteur de lumière sur un objet (2, 3, 8) se trouvant dans la zone de scannage (5), unité de focalisation qui est sollicitée par l'unité de détermination d'espace ou de détection d'image.

5. Dispositif selon l'une des revendications précédentes,
**caractérisé en ce que**
il est prévu une sortie de signal pour mettre à disposition une information déterminée à partir des valeurs d'espace ou d'image fournies et concernant un objet (2, 3, 8) se trouvant dans la zone de scannage (5).

6. Dispositif selon l'une des revendications précédentes,
**caractérisé en ce que**
il est prévu une unité pour déterminer la vitesse d'un objet (2, 3, 8) se déplaçant dans la zone de scannage (5) à partir des valeurs d'espace ou d'image fournies en succession temporelle par l'unité de détermination d'espace ou de détection d'image.

7. Procédé de reconnaissance de codes au moyen d'un lecteur de code (4) dans lequel des signaux lumineux sont émis par un émetteur de lumière en direction d'une zone de scannage (5), les signaux lumineux sont réémis depuis la zone de scannage (5) vers un récepteur de lumière, le signal de sortie du récepteur de lumière est amené à une unité de commande et d'évaluation pour piloter l'émetteur de lumière et le récepteur de lumière et pour déterminer un code à partir du signal lumineux reçu, dans lequel
- la détermination d'un code est déclenchée par un circuit déclencheur associé à l'unité de commande et d'évaluation, lequel est sollicité par une unité de détermination d'espace ou de détection d'image intégrée dans le lecteur de code (4) pour détecter un objet (2, 3, 8) se trouvant dans la zone de scannage (5), et
- tant pour déterminer l'espace ou l'image que pour déterminer le code, on utilise le même émetteur de lumière, ou tant pour déterminer l'espace ou l'image que pour déterminer le code, on utilise le même récepteur de lumière, ou tant pour déterminer l'espace ou l'image que pour déterminer le code, on utilise le même émetteur de lumière et le même récepteur de lumière,
**caractérisé en ce que**
l'unité de détermination d'espace ou de détection d'image permet d'effectuer une détermination d'espace dans une partie de la zone de scannage (5) ou dans toute la zone de scannage (5) de telle sorte que l'on peut déterminer un profil d'espace bidimensionnel ou tridimensionnel et que l'on détermine un profil d'espace bidimensionnel ou tridimensionnel.

8. Procédé selon la revendication 7,
**caractérisé en ce que**
l'achèvement de la détermination de code a lieu en fonction des valeurs d'espace ou d'image fournies par l'unité de détermination d'espace ou de détection d'image, de telle sorte que finalement, une porte de lecture limitée dans le temps est générée en fonction des valeurs d'espace ou d'image fournies.

9. Procédé selon la revendication 7,
**caractérisé en ce que**
l'achèvement de la détermination de code a lieu après un intervalle temporel prédéterminé qui se raccorde au déclenchement de la détermination de code.

10. Procédé selon l'une des revendications 7 à 9,
**caractérisé en ce que**
l'unité de détermination d'espace sollicite une unité de focalisation pour focaliser une optique émettrice et/ou réceptrice associée à l'émetteur de lumière et/ou au récepteur de lumière sur un objet (2, 3, 8) se trouvant dans la zone de scannage (5).

11. Procédé selon la revendication 10,
**caractérisé en ce que**
la focalisation est initialisée avant ou en même temps que le déclenchement de la détermination de code.

12. Procédé selon l'une des revendications 10 ou 11,
**caractérisé en ce que**
pendant une détermination de code, l'unité de focalisation est réglée automatiquement à différentes valeurs d'espace consécutives couvrant touts les espaces de lecture possibles.

13. Procédé selon l'une des revendications 7 à 12,
**caractérisé en ce que**
une information déterminée via une sortie de signal depuis les valeurs d'espace ou d'image et concernant un objet (2, 3, 8) se trouvant dans la zone de scannage (5) est fournie à d'autres dispositifs (9, 10) pour reconnaître un code.

14. Procédé selon la revendication 7,
**caractérisé en ce que**
avant la détermination de code, un profil d'arrière-plan bidimensionnel ou tridimensionnel (figure 3a) est appris et, dans le cadre de la détermination de code, le profil de différence (figure 3c) entre le profil d'espace (figure 3b) bidimensionnel ou tridimensionnel actuellement déterminé et le profil d'arrière-plan appris est évalué.

15. Procédé selon la revendication 14,
**caractérisé en ce que**
le profil de différence, en particulier la valeur minimum du profil de différence, est mis à contribution pour la focalisation.

16. Procédé selon l'une des revendications 7 à 15,
**caractérisé en ce que**
l'unité de détermination d'espace est activée de manière cyclique.
